# EUROPEAN PATENT APPLICATION

(11) **EP 4 756 654 A1**
(43) Date of publication of application: **10.06.2026**
(21) Application number: 25214866.3
(22) Date of filing: 11.11.2025
(51) Int. Cl.: G06F 21/57, G06N 3/0475, G06N 5/022

(54) **CYBERSECURITY THREAT INTELLIGENCE GRAPH CONSTRUCTION**

(30) Priority: 03.12.2024 US 202418967577
(71) Applicant: Microsoft Technology Licensing LLC, Redmond, WA 98052-6399 (US)
(72) Inventor: ALBADA, Michael Charles, Redmond, 98052-6399 (US); SANKARAN, Anush, Redmond, 98052-6399 (US); ABDI, Amir Hossein, Redmond, 98052-6399 (US); WANG, Tong, Redmond, 98052-6399 (US)
(74) Representative: Page White Farrer

(57) **Abstract**

A computer-implemented method includes storing threat intelligence documents and a graph data store. The graph data store includes entity nodes and a plurality of edges between the nodes extracted from the plurality of threat intelligence documents. Data is also stored linking the entity nodes and edges to the threat intelligence documents from which they were extracted. A generative machine learning model is employed to generate a summary text of threat intelligence for a first entity node, based on the first entity node, second entity nodes connected to the first entity node and the threat intelligence documents from which they were extracted. The summary text is inserted as a summary node into the graph comprising the generated summary text.

## Description

### Background

A key aspect of cybersecurity analysis is understanding and monitoring emerging threats. Information pertaining to emerging or existing threats (referred to herein generally as threat intelligence data) may be provided publicly in a wide variety of forms. For example, some countries publish national databases of cybersecurity alerts and information. Similarly, large cybersecurity companies or organizations also publish threat intelligence data. There is also a wide range of other sources for threat intelligence data, such as blogs, forums and social media. This threat intelligence data that is made publicly available on the Internet may also be referred to as "open source" threat intelligence data.

### Summary

According to a first aspect of the disclosure there is provided a computer-implemented method comprising: storing threat intelligence documents; storing, in a graph data store, a graph comprising: entity nodes corresponding to entities extracted from the threat intelligence documents; and a plurality of edges between the entity nodes representative of relationships between the entity nodes extracted from the threat intelligence documents; storing data linking the entity nodes and plurality of edges to the threat intelligence documents from which the entity nodes and plurality of edges were extracted; generating an input for a generative machine learning model comprising: a first entity node of the entity nodes; a plurality of second entity nodes of the entity nodes connected to first entity node by connecting edges of the plurality of edges; a subset of the threat intelligence documents from which the first entity nodes, the plurality of second entity nodes and the connecting edges were extracted; instructions, which when processed by the generative machine learning model, cause the generative machine learning model to generate a summary text of threat intelligence for the first entity node, based on the first entity node, the plurality of second entity nodes and the subset of the threat intelligence documents; providing the input to the generative machine learning model, and in response receiving the summary text; inserting a summary node into the graph comprising the generated summary text; and inserting edges into the graph connecting the summary node to the first entity node and plurality of second entity nodes.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
FIG. 1 is a block diagram of an example system.
FIG. 2 is a block diagram illustrating an example graph builder.
FIG. 3 is a schematic representation of the structure of an example prompt used by a triplet generator.
FIG. 4 is a schematic representation of the structure of an example prompt used by a triplet refiner.
FIG. 5 is a block diagram illustrating a first example operation of a graph summarizer.
FIG. 6 is a block diagram illustrating a second example operation of a graph summarizer
FIG. 7A is a schematic representation of an example user interface.
FIG. 7B is a schematic representation of another example user interface
FIG. 8 is a schematic flowchart of an example method.
FIG. 9 is a schematic flowchart of an example method.
FIG. 10 is a block diagram of an example computing system.

### Detailed Description

Threat intelligence data emanates from a wide variety of sources. Threat intelligence data contains valuable information, but it is dispersed across numerous documents and sources with varying qualities and degrees of standardization. Currently, cybersecurity analysts and threat intelligence experts face significant challenges in rapidly identifying relevant new information and tracking thematic changes over time due to the sheer volume and complexity of the data. This information overload can delay the detection of emerging threats and hinder the effective monitoring of evolving cybersecurity landscapes.

To illustrate, consider an example scenario where an analyst is trying to understand the progression of a specific type of cyber-attack or vulnerability exploitation across different geographic regions and over time. Manually searching through and analyzing countless documents to extract relevant information, identify connections, and summarize findings is not only time-consuming but also prone to oversight and errors. Furthermore, whilst threat intelligence data from a single source may not necessarily be reliable, the repetition of the same or similar intelligence data from multiple sources may indicate that the intelligence data is indeed reliable.

To address these issues, the disclosure provides a means of extracting entities and the relationships between them from input threat intelligence documents. Threat intelligence documents are documents that provide information about cybersecurity threats. The threats may be potential or actual threats. The documents may comprise descriptions of malware, phishing attacks, ransomware, descriptions of attack vectors and methods, descriptions of mitigation and response strategies, descriptions of threat actors and so on. Documents in this context may be any suitable format that is capable of storing information. Examples include articles, blogposts and the like, which may take the form of webpages, structured documents and so on.

The extracted relationships may take the form of subject-object-predicate triples, such as ("Threat actor X", "Financial Services Company Y", "applying ransomware attack"), which indicates that the intelligence data discloses that Threat actor X is applying a ransomware attack to Financial Services Company Y. Other example entities include IP addresses, file hashes, vulnerabilities, domain names, and so on. Particularly, a generative machine learning model may be used to generate the triples, thus avoiding computational resource that would be expended in providing an interface that allowed manual labelling of the triples.

The disclosure also provides a means of populating a graph data store with the entity nodes and edges. The entity nodes form nodes of the graph, with the edges representing the relationships between the entity nodes. In examples, a user interface is provided that allows a user (e.g. a cybersecurity analyst or threat intelligence expert) to interact with the data stored in the graph data store, thereby exploring the graph. Furthermore, the disclosure provides a means of generating summary nodes and inserting them into the graph data store, by generating an input for a generative machine learning model comprising a first of the entity nodes of the graph, a plurality of second entity nodes of the graph and the threat intelligence documents from which they were extracted. This provides an automated means of generating summaries, thus avoiding wasted computational resource involved in navigating the graph to review all of the connections of an entity node and determine its relevance. It also provides a machine-readable resource, which can be used to take mitigation actions in security systems, thus improving the security of those systems. The summary nodes may summarize the relationships, condensing the information expressed by the relationships into formats readily interpretable by the user. In one example, a community detection algorithm is applied to the graph data store to select a subset of nodes and edges to be summarized in a summary node.

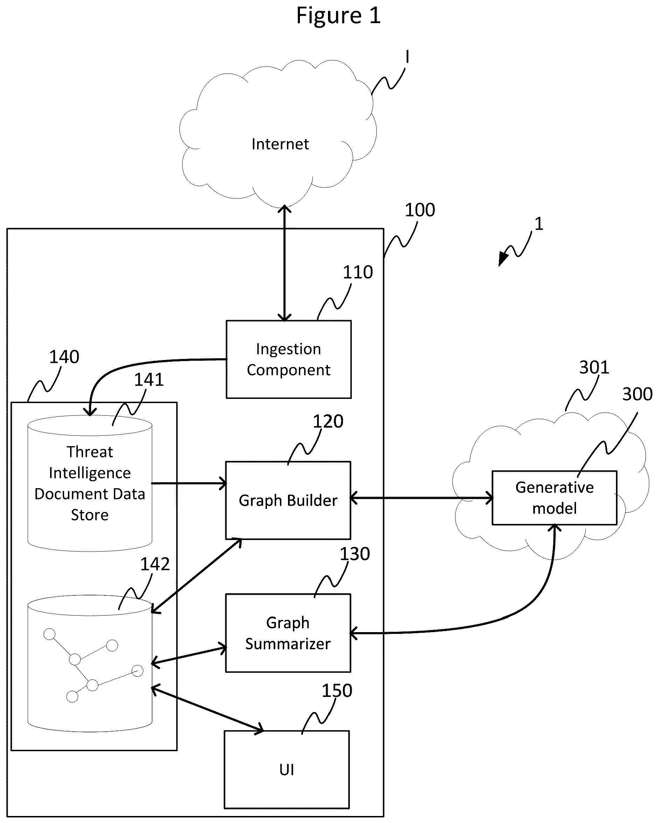

FIG. 1 is a schematic block diagram of an example environment 1 comprising a computer system 100 according to examples of the disclosure.

The environment 1 also includes one or more generative machine learning models 300. The computer system 100 is furthermore configured to interface with the generative machine learning model 300.

An example of a generative machine learning model 300 is a Large Language Model (LLM). The LLM is a trained language model, based on the transformer deep learning network. The LLM is trained on a very large corpus (e.g., in the order of billions of tokens), and can generate text or data in response to receipt of an input in the form of a prompt.

An example of a suitable LLM is the Open AI General Pretrained Transformer (GPT) model, for example GPT-3, GPT-3.5 turbo or GPT-4. However, a variety of LLMs may be employed in the alternative. Similarly, in some examples Small Language Models (SLMs) such as DistilBERT or Microsoft's Phi-3 may be employed.

The model 300 operates in a suitable computer system 301. For example, the model 300 is stored in a suitable data centre, and/or as part of a cloud computing environment or other distributed environment. The model 300 is accessible via suitable APIs (application programming interfaces), for example over a network.

The system 100 interfaces with the model 300 by providing inputs to the model 300 and receiving responses. In text processing examples, the input may be referred to as a prompt, and includes instructions that, when processed by the model 300, cause the model 300 to provide a desired response.

In examples, the model 300 is configured to receive text as input and generate text in response. Accordingly, in this context, instructions to be processed by the model 300 refer to instructions provided in a natural language (e.g. in English) that can be received as input by the model 300 and processed thereby. The instructions may generally comprise a textual explanation of the task and the form of the desired response. The instructions may comprise further contextual information that assists the model 300 in performing the task, such as a description of a persona to adopt, a description of relevant rules or conventions required to provide the output. In some examples, the input may also comprise one or more training examples, referred to as shots.

The process of constructing (or generating) the input may include retrieving one or more strings from the storage 140, such as template text. Template prompts may be referred to as metaprompts or system prompts, as distinct from prompts typed on-the-fly by users. The process may also comprise generating one or more strings, for example by converting data extracted from the storage 140 into strings. The resulting strings can then be concatenated or otherwise combined to form the prompt. For example, each string may be loaded into memory, and combined to form a larger string comprising the prompt. The prompt is then stored in memory (e.g., in volatile memory) before being transmitted to the model 300, e.g., via an API call.

The response received from the model 300 may also be in the form of text. The system 100 is configured to extract relevant data from the response, e.g. by extracting suitable substrings from the string of text.

For convenience, in the description that follows text input and output is assumed to be text, and so the generative machine learning model 300 is a language model, such as the LLMs or SLMs described above. However, it will be understood that the present disclosure may also applies to other modalities. For example, the input to the model 300 may comprise audio, images or videos relating to cybersecurity threats. That is to say, in some examples, the machine learning model 300 is a multimodal model.

Turning to the components of system 100 in more detail, the computer system 100 comprises an ingestion component 110, a graph builder 120 and a graph summarizer 130. Furthermore, the computer system 100 comprises a user interface (UI) 150.

In addition, the computer system 100 comprises a storage 140, which includes a threat intelligence document store 141 and a graph data store 142. The storage 140 is also configured to store, transiently or permanently, any data or instructions to carry out any of the methods or functionality discussed herein. It may comprise volatile and/or non-volatile memory.

The ingestion component 110 is configured to retrieve threat intelligence documents and store them in the threat intelligence document store 141.

In one example, the threat intelligence documents are webpages, and so as indicated in FIG. 1, ingestion component 110 is able to access the internet I to retrieve webpages comprising threat intelligence.

The ingestion component 110 may be configured to download specific web pages. For example, a list of web pages may be provided by a user. The web pages could correspond to the aforementioned national or otherwise publicly available databases.

The ingestion component 110includes a web crawler, configured to download (i.e. scrape) webpages. The web crawler may be provided with a set of seed webpages, which may include the national or otherwise publicly available databases and a variety of less trustworthy sources such as blogs, forums and the like. Examples of suitable databases include those provided by the Information Sharing and Analysis Organizations (ISAOs), Information Sharing and Analysis Centers (ISACs), the National Vulnerability Database, the MITRE corporation, the Joint Regional Intelligence Centers, among others. The crawler begins at the seed websites, and is configured to follow links in the webpages to retrieve further threat intelligence documents.

It may also be the case that the crawler is provided with search terms, which are then provided to a search engine. The crawler then crawls the results retrieved from the search engine to ascertain the threat intelligence documents.

In other examples, the retrieved threat intelligence documents need not be web pages. For example, posts made on RSS feeds may be retrieved, or other publicly available structured documents comprising material describing threats may be obtained.

In yet further examples, threat intelligence documents may be retrieved from social media. That is to say, social media posts may form threat intelligence documents. Social media is a surprisingly rich source of threat intelligence, including platforms such as X^{®}, Linkedln^{®}, Substack^{®} and Medium^{®}, as threat analysts and threat hunters often try to build their reputations, and these sources often move faster than traditional sources.

In one example, the threat intelligence document store 141 takes the form of a database (e.g. a relational database), which consequently permits the document store to be queried to retrieve documents therefrom for the further processing discussed below. However, in other examples, various other suitable data storage techniques may be employed. For example, the documents may be stored as flat files, or in a NoSQL database or the like.

In examples, the ingestion component 110 is configured to carry out the above-described processes on a periodic basis. For example, the ingestion component 110 may ingest new threat intelligence documents on a daily basis, on an hourly basis or according to some other time frame. In addition, the ingestion component 110 may be executed on demand, for example where a user of the system becomes aware that there is a new threat that is likely to be discussed in recently published threat intelligence documents.

The ingestion component 110 may be configured to only store documents in the threat intelligence document data store 141 that have not already been retrieved and stored. For example, an updated version of a web page maybe stored separately in the document store 141 from a previous version, but if a web page has not changed since the previous retrieval a duplicate will not be stored.

Accordingly, the ingestion component 110 provides a mechanism for automatically retrieving open-source threat intelligence from the Internet.

Graph builder 120 is configured to take as input documents from the threat intelligence document data store 141, and then generate entity nodes and relationships therebetween which are representative of the threat intelligence disclosed in the documents. The entity nodes and relationships are stored in graph data store 142.

The entity nodes and relationships may take the form of subject-object-predicate triplets. The entity nodes represent semantically meaningful elements mentioned in the threat intelligence document. The entity nodes may correspond to people, organisations, objects, places and so on. The entity nodes may be for example be threat actors, organisations or other entities that have been attacked, particular IP addresses, file hashes, threat vectors, operating systems or other software, common vulnerabilities and exploits (CVEs) and so on. The relationships express the connection between two entity nodes, for example expressing that a particular type of attack has been made by a particular actor against a particular organisation. The fact that the triplets are subject-object-predicate indicates a direction to the relationship - the subject is applying the predicate to the object. Consequently, the relationship in the graph data store 142 is directional (i.e. the graph is directed) to reflect this. It will be understood that these are merely examples of relationships that can be extracted from the collected threat intelligence documents.

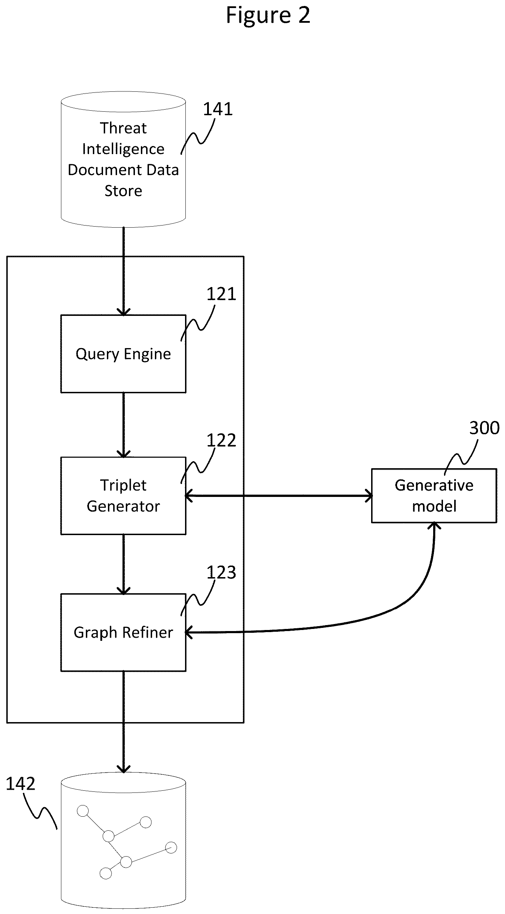

FIG. 2 illustrates the graph builder 120 in more detail. The graph builder comprises a query engine 121, a triplet generator 122 and a graph refiner 123.

The query engine 121 is configured to access the threat intelligence document data store 141 and retrieve documents there from. The query engine 121 may retrieve documents one-by-one to provide them as input to the triplet generator 122, though in other examples, groups of related documents maybe retrieved and combined (e.g. concatenated) to be provided as input to the triplet generator 122.

Initially, when first populating the graph data store, the query engine 121 retrieves all of the documents in the data store 141 for processing by the triplet generator. However, once the graph data store has been initially populated, the query engine 121 retrieves documents newly added to the data store 141, for example those that have yet to be processed by the triplet generator 122. It may be the case that the query engine 121 is executed automatically after the ingestion component 110 has been periodically executed as described above or is executed periodically or on demand.

The triplet generator 122 takes a threat intelligence document as input and constructs an input (e.g. a prompt) for model 300 that comprises content from the threat intelligence document and instructions, which when processed by the model 300, cause the model 300 to generate a response comprising the triplets.

It will be understood that, in this context, the model 300 is configured to receive instructions in text form, and thus the instructions in prompt are written at least partially in natural language. The natural language may be enclosed in suitable tags according to a markup language, or may otherwise be structured. In other words, instructions in this context need not be executable instructions in the sense of lines of source code or compiled code.

The triplet generator 122 is configured to retrieve a template prompt 143 stored in storage, which comprises pre-prepared instructions that cause the model 300 to generate the triplets. The template prompt 143 includes a "slot" into which the content of the document(s) is inserted to complete the prompt. In practice, filling a slot in the template may involve concatenating strings representing the template prompt 143 and the content for the slot (e.g. the contents of the document).

In examples, the triplet generator 122 extracts content from a document received from the query engine 121 to include in the prompt. For example, where the document is a webpage in HTML format, the triplet generator 122 may extract the text content therefrom before inserting the content in the template prompt 143.

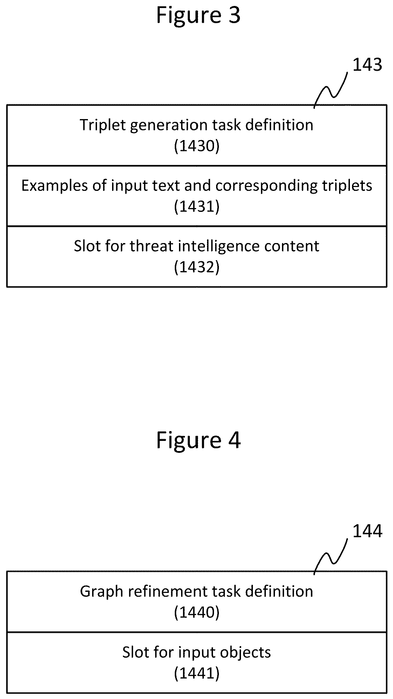

Turning to FIG. 3, a schematic representation of the template prompt 143 is illustrated.

The prompt 143 comprises a task definition 1430, which provides instructions setting out the task. For example, this specifies that the task is that of generating triplets in subject-predicate-object form that represent the threat intelligence contained in the document. The task definition 1430 further includes a description of the expected response format. For example, the task definition 1430 may specify that the triplets should be returned in a JSON (Javascript Object Notation) array or another suitable data structure that can readily be parsed.

The prompt template 143 also includes examples 1431 of input text and corresponding triplets generated therefrom. Each pair of input text and corresponding triplets may be referred to as a "shot" - i.e. a training example used in guiding the model 300 in providing the desired output. For example, the prompt template 143 may include a relatively small number of examples, comparative to the amount of training examples that would be required for traditional supervised machine learning - for example 5 training examples.

The prompt template includes a slot 1432 for inserting the input content from the threat intelligence document.

It will be understood that this is merely an example of a suitable structure for the template prompt 143. In other examples, further content is added to the template prompt or some of the content discussed above is omitted. For example, the slots 1431 may be omitted, and/or the prompt 143 may contain further instructions, such as a description of a role or person that the model 300 should adopt, descriptions of irrelevant relationships that ought not to be generated, background information in relation to threat intelligence that may assist the model in its task and so on. Equally, the order of the elements of the prompt 143 may be varied. In general, the requirement is that the content of the prompt 143 reliably generates suitable triplets from the input content. It will be understood that a wide variety of particular formulations of the prompt 143 may achieve this aim.

Returning to FIG. 2, the prompt is provided as input to the model 300, and in response, the model 300 returns the triplets. As discussed above, the triplets may be in a JSON array or similar format, which permits them to be readily parsed.

This process is then repeated for each of the documents in the threat intelligence document data store in order to generate triplets therefrom.

Graph builder 120 proceeds to populate the graph data store 142 with the triplets.

The graph data store 142 may be any suitable data structure for storing data in the form of nodes connected by edges, wherein the nodes represent entities, and the edges represent relationships between the entities.

For example, a suitable graph database may be employed. Examples of suitable graph databases include Neo4j^{®}, Amazon^{®} Neptune, ArangoDB, OrientDB, TigerGraph^{®}, JanusGraph and so on.

The graph database maybe configured to execute queries in a suitable query language. For example, Neo4j supports the cypher query language, but it will be understood that other graph databases may have other similar query languages.

To populate the graph data store 142, graph builder 120 generate suitable queries including the triplets, which causes said triplets to be included in the data store.

The graph builder 120 furthermore generates data that links the nodes and edges with the threat intelligence document from which they were extracted.

For example, the graph data store 142 may support storing properties (i.e. attributes) associated with the nodes and edges. These properties may be used to store data linking a node or an edge with the threat intelligence documents from which they were extracted, as stored in threat intelligence document data store 141. In other words, the graph builder 120 stores data that permits the retrieval of the document from which a node or edge originated.

For example, the property records a file location of the document if flat file storage is used for the threat intelligence document data store 141. If a relational database is used for the threat intelligence document data store 141, a suitable key for retrieving the document from the database is instead stored as a property.

In some examples, the properties may also store the date of the threat intelligence document (i.e. the date on which it was published, which may be readily extracted from the document), and/or the date on which the threat intelligence document was ingested.

In other examples, the data linking the nodes and edges to the threat intelligence documents may be stored in a separate data structure than the graph database 142, such as a table of a relational database or a suitable key-value store with the keys being an ID of the node or edge and the values being the location(s) of the document(s).

Accordingly, the output of the graph builder 120 is a populated graph data store 142, which includes a structured repository of threat intelligence data.

The graph refiner 123 is configured to rationalize the graph by identifying relationships between entities that in fact correspond to one another. For example, one triplet may be ("Threat actor X", "Company Y", "Distributed denial of service") and another triplet may be ("Threat actor X, "Company Y", "DDOS"), where DDOS and Distributed denial of service are synonymous. Similarly, one triplet may use different names for underlying threat actors or attacked entities.

Put differently, the graph refiner 123 identifies redundant graph objects (i.e. entity nodes or edges), in the sense that they define the same entity or relationship. In one example, the output of graph refiner 123 is a mapping indicating which relationship or entity is redundant. The mapping may be in the form of a lookup table, where a plurality of input entity nodes and/or edges are mapped to a single output entity node or edge. A mapping may have the form [[array of input objects], output object], for example taking the form of a JSON array. Continuing the example above, the following mapping may express that the two input objects correspond to the same output:

### [ ["Distributed denial of service", "DDOS"], Distributed denial of service"]

If a particular object is not redundant (i.e. it represents a relationship that is not expressed by another edge or an entity that is not expressed by another node), then the length of the input array will be 1, and the object present in the input array will be the same as the triplet in the output.

In order to generate the mapping, the graph refiner 123 uses model 300. The graph refiner 123 constructs an input (e.g. a prompt) for model 300 that comprises a plurality of input objects and instructions, which when processed by the model 300, cause the model 300 to generate a response comprising a mapping as discussed above.

The graph refiner 123 is configured to retrieve a template prompt 144 stored in storage 140, which comprises pre-prepared instructions that cause the model 300 to generate the mapping. The template prompt 143 includes a slot into which the input triplets are inserted to complete the prompt.

**In** examples, the graph refiner 123 receives batches of input objects. These may be retrieved from the graph data store 142, or received directly from triplet generator 122. The graph refiner 123 then includes the batch of input objects in the prompt 144. For example, a batch of input objects may comprise 10, 20, 30, 40, 50, 75, 100 or any other suitable number of objects triplets.

FIG. 4 illustrates a schematic representation of the template prompt 144. The prompt 144 includes a first section 1440 that comprises a definition of the refinement task. This may include natural language instructions, describing the task of rationalising the nodes and edges of the graph. It may also include the definition of the desired output format, which may follow the above-described JSON array. The prompt 144 furthermore includes a slot 1441 for inserting the batch of input triplets.

The completed prompt is provided as input to model 300, which in response returns the mappings which serve to rationalise the nodes and edges of the graph.

Upon receipt of the mappings, the graph refiner 123 may take suitable action to rationalise the objects in the graph. Where the graph refiner 123 takes input directly from the triplet generator 122, the generated triplets may be rationalised based on the mappings before insertion into the graph data store 142. Where the graph refiner 123 retrieves the objects from the graph data store 142, the graph refiner 123 effectively combines duplicate nodes or edges. For example, where there are two nodes with that represent one underlying entity, the graph refiner 123 may amend the edges of the redundant node so they are attached to the node being retained (i.e. the node indicated by the output of the mapping). The redundant node may then be deleted. If the mapping indicates a redundant edge, then the edge is deleted. The graph refiner 123 is configured to generate queries in the query language supported by the graph data store 142 to amend the relationships and/or delete the redundant nodes or edges.

Returning to FIG. 1, the graph summarizer 130 will now be discussed. A graph summarizer 130 is configured to process the graph stored in the graph database and insert further nodes into the graph which act as summaries of entities and their relationships. The summary node comprises summary text, describing the summarized entities and their relationships. These summary nodes are connected to the entities they summarise by edges that represent a summary relationship. These techniques assisting summarising clusters and patterns within the graph, reflecting potential trends in threat intelligence data, and revealing further relationships. Once again, the model 300 may be used to generate the summaries.

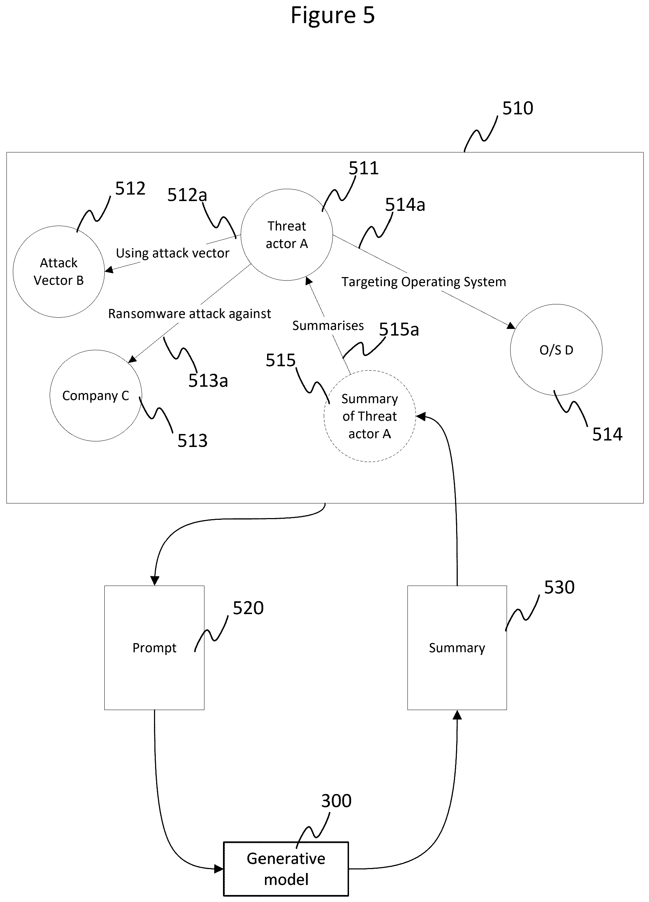

FIG. 5 generally illustrates a technique used in generating a summary node. As illustrated, a subgraph 510 of the graph stored in graph data store 141 is identified. In this example, the subgraph 510 includes nodes 511, 512, 513, 514 that are connected by edges 512a, 513a, 514a. The subgraph 510 is rooted at node 511, in the sense that the subgraph 510 comprises nodes that are all connected to node 511.

In the example shown, for simplicity's sake, the nodes 512-514 are all connected to node 511 by a single link, both in the sense that only one relationship connects each node 512-514 to node 511, and in that each node 512-514 is directly connected to node 511 by a single "hop" of the graph (i.e. the traversal of a single edge).

The selected subgraph 510 is then used to generate a prompt 520 for model 300. For example, the edges and entity nodes comprised in the subgraph are extracted, along with at least some of the content of at least some of threat intelligence documents from which the entity nodes and edges were drawn. These edges and entity nodes, along with the content of the relevant threat intelligence documents are inserted into the prompt 520. As before, the prompt 520 may be a template prompt that include slots to accommodate the entities, relationships and the content of the threat intelligence document.

The prompt 520 furthermore includes instructions, which when processed by the model 300, cause the model to generate summary text comprising a summary of the entity node at which the subgraph 510 is rooted. The summary text provides an overview of the entity node, which takes into account its relationships to the other entities and the content of the threat intelligence documents from which they were extracted. The summary text may include a description of the node, a description of some or all of the relationships, and may include description that is taken from, or based on, the content of at least some of the threat intelligence documents.

The instructions may include a description of the task, including guidance regarding the format of the output. For example, the instructions may express that a summary of the entity nodes and edges in the sub graph is required in natural language. The instructions may express that the target audience for the summary is a security analyst or threat intelligence expert. The instructions may specify a desired length of the summary. The instructions may include any other relevant information or rules, background material or information, and the like. The instructions may include instructions that cause the summary to include links to the threat intelligence documents (either in the data store or on the Internet), so that the reader of the summary may easily access the source material from which it is generated.

The prompt 520 is provided as input to model 300, which in response returns the summary text 530. Subsequently, graph summarizer 130 inserts the summary as a new node 515 in the graph data store 142, which is connected to the node 510 by the relationship "summarises". The summary text may be a property of the node 515. This is for example accomplished by generating a suitable query in the graph query language that is supported by the graph data store 142. Accordingly, a condensed summary of the entity relationships that node 510 participates in is generated, and also integrated back into the graph.

The subgraph 510 may be identified (i.e. selected from the graph as a whole) by first selecting a particular entity node of the graph as the root entity node 510. The subgraph 510 can then be determined based on the selected entity node 511. In one example, the subgraph comprises all nodes within a certain number of hops of the selected root node 510. For example, the subgraph 510 may be a 1-hop subgraph, where all the nodes are one hop (i.e. connected by a single edge) from the root entity 511. In other examples, the subgraph 510 may be a 2-hop subgraph, including all nodes within two hops (i.e. directly connected by a single hop, and connected by one intervening node/two edges). More generally, the subgraph may be an n-hop subgraph, where n is any suitable positive integer, such as 1, 2, 3, 4, 5 etc.

In another example, a community detection algorithm may be applied to the graph. Community detection algorithms are configured to detect communities in graphs, where communities are clusters of nodes that are relatively densely connected, and comparatively few edges join the nodes of different clusters. A wide variety of community detection algorithms exist, some of which partition the graph into non-overlapping clusters, and some of which determine communities that may overlap with one another. Either way, communities detected by these techniques form a subgraph of the graph. The subgraph that includes the root entity node 511 may be selected as the subgraph for which the summary is generated.

One example community detection algorithm is the Louvain method, disclosed in Blondel, Vincent D., et al. "Fast unfolding of communities in large networks." Journal of statistical mechanics: theory and experiment 2008.10 (2008), the contents of which are incorporated herein by reference in their entirety. The Louvain method groups nodes that are more densely connected to each other than other parts of the network into communities. It operates by first assigning each node to its own community, then iteratively merging nodes into communities to maximise a metric known as "modularity", which quantifies the strength of connections within communities as opposed to between them. The merging process continues until no further improvement in modularity is possible, resulting in a set of distinct communities in the graph.

Other community detection algorithms include the Girvan-Newman algorithm (Girvan M. and Newman M. E. J., Community structure in social and biological networks, Proc. Natl. Acad. Sci. USA 99, 7821-7826 (2002)), the Clauset-Newman-Moore algorithm (Clauset, Aaron; Newman, M. E. J.; Moore, Cristopher (2004-12-06). "Finding community structure in very large networks". Physical Review E. 70 (6)), the Pons and Latapy algorithm (Pons, Pascal; Latapy, Matthieu (2006). "Computing Communities in Large Networks Using Random Walks" (PDF). Journal of Graph Algorithms and Applications. 10 (2): 191-218) and the Wakita and Tsurumi algorithm (Wakita, Ken; Tsurumi, Toshiyuki (2007). "Finding Community Structure in Mega-scale Social Networks". arXiv:cs/0702048).

It will be understood that these are merely example approaches for determining the subgraph. In other examples, other suitable algorithms can be employed to determine the relevance of nodes to the selected root entity node 510, and thus act as a means of determining the subgraph.

The process described above with respect to FIG. 5 may be repeated for a plurality of nodes in the graph. For example, the graph summarizer 130 may iterate through all the nodes in the graph, generating summaries. In other examples, the graph summarizer 130 iterates through nodes of a certain type - for example those corresponding to threat actors, or those corresponding to exploits, vulnerabilities or threats.

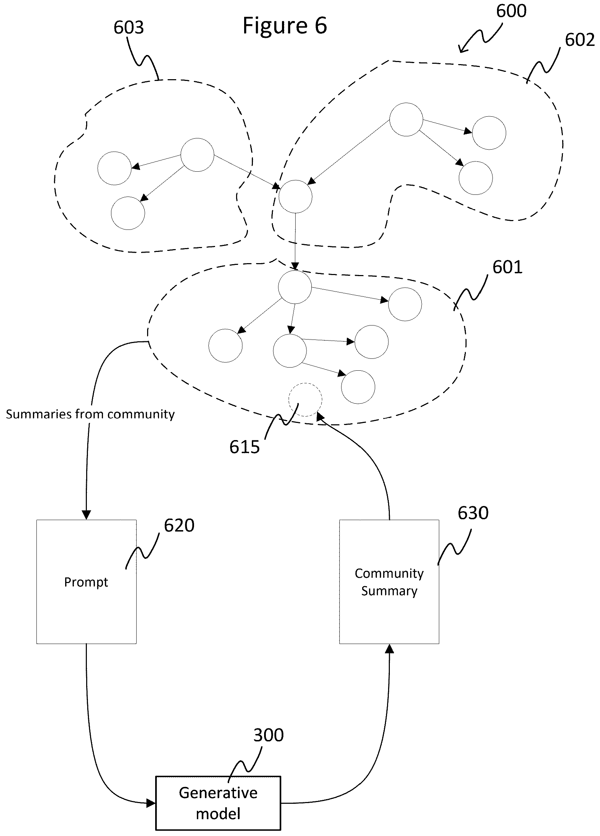

FIG. 6 illustrates another technique that may be employed to generate a summary node. In this technique, the summary nodes generated in the process described with respect to FIG. 5 are used as input for generating a further summary. This is in effect a summary of summaries, thus forming part of a hierarchical summarisation technique.

Initially, the graph 600 is partitioned into communities. In the example graph illustrated in FIG. 6, three communities 601, 602 and 603 are illustrated. For a community 601 of the communities, any summary nodes 515 within the community 601 are selected, and the summaries thereof are extracted.

The graph summariser 130 generates a prompt 620 for model 300 comprising the summaries extracted from the community. As before, the prompt 620 may be a template prompt that include slots to accommodate the summaries.

The prompt 620 furthermore includes instructions, which when processed by the model 300, cause the model to generate a further summary of the community based on the extracted summaries.

The instructions may include a description of the task, including guidance regarding the format of the output. For example, the instructions may express that a summary is required in natural language. The instructions may express that the target audience for the summary is a security analyst or threat intelligence expert. The instructions may specify a desired length of the summary. The instructions may include any other relevant information or rules, background material or information, and the like.

The prompt 620 is provided as input to model 300, which in response returns the community summary 630. The community summary is text describing or otherwise summarising the entity nodes and edges in the community. The community summary is based on the summaries extracted from the community, for example including parts of those summaries or an overview thereof. Subsequently, graph summarizer 130 inserts the community summary as a new node 615 in the graph data store 142, which is connected to the summary nodes in the community 601 with a relationship indicative of the fact that the community summary node 615 summarises the summary nodes. The text of the community summary may be a property of the node 615. This is for example accomplished by generating a suitable query in the graph query language that is supported by the graph data store 142.

This is then repeated for each community 601-603 in the graph.

In some examples, the process may be repeated, with multiple community summaries forming input for generating a higher-level summary. Accordingly, hierarchical summaries may be inserted into the graph.

Returning to FIG. 1, the UI 150 provides a means of browsing or otherwise navigating the data stored in graph data store 142. The UI 150 allows the user to view the entities and relationships contained in the graph data store 142, including the summary nodes generated by graph summariser 130.

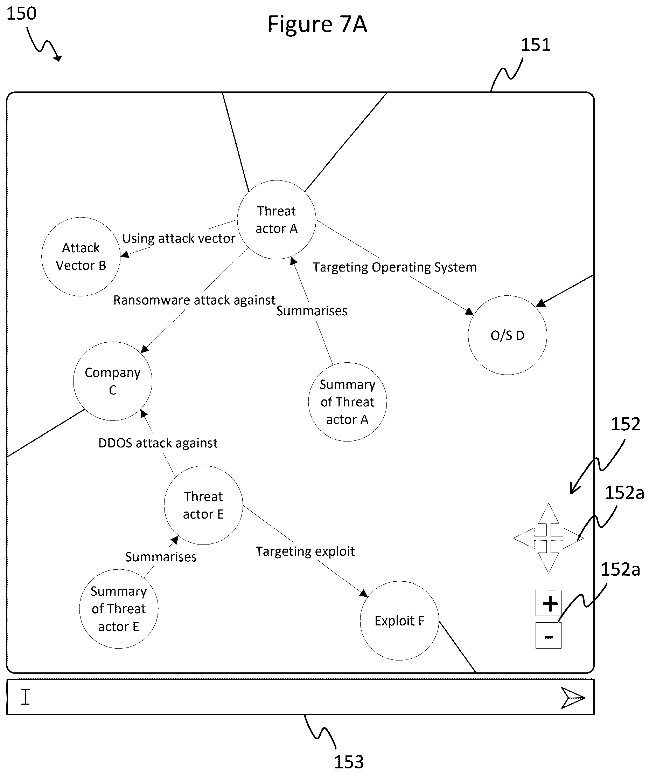

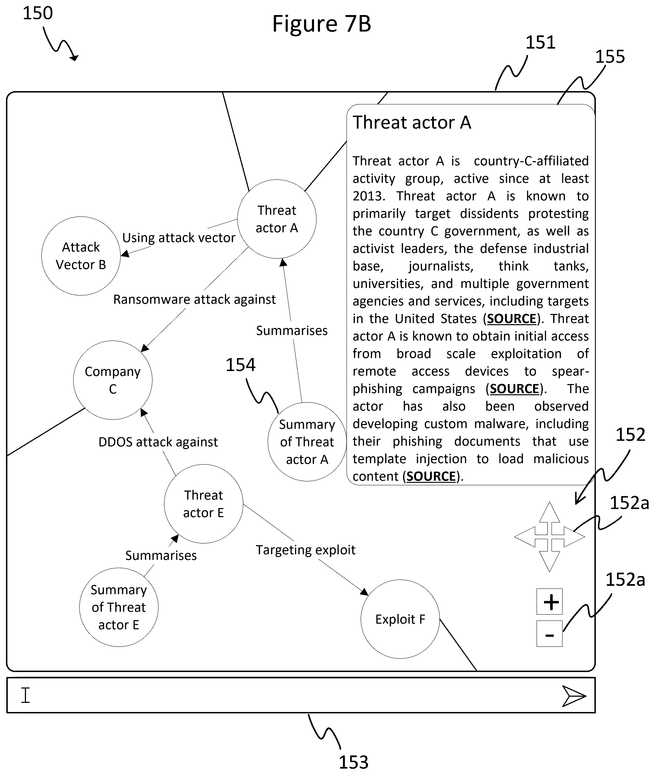

FIG. 7A and 7B illustrate examples of the UI 150. In FIG. 7A, the UI 150 comprises a display pane 151, which renders the entities and relationships as nodes and edges of a graph. The display pane 151 is effectively a "window" into this visualisation of the graph, and the user may navigate the graph by providing input to navigation controls 152, which may include an input control 152a for panning the graph and an input control 152b for zooming in and out on the graph.

In the example shown, the edges are labelled with the relationships, though in other examples the labels appear when selected - e.g. by clicking on or hovering a cursor over the relationship.

The UI 150 also comprises a search bar 153, which may permit the user to enter either a plain text query, or a query in the graph query language supported by the graph data store 142.

In FIG. 7B, the user has selected the node 154 that represents the summary of the threat actor A. In various examples, this may be accomplished by double-clicking the node 154, right clicking the node 154 and selecting a suitable option from a menu, or providing some other suitable user input. In response, the UI 150 displays the summary 155. The summary 155 may include links to the threat intelligence documents that act as the source for the text of the summary. The user is able to follow the links, which may for example open in a web browser or another display pane, or be displayed within pane 151.

In one example, the UI 150 is a web interface. In other words, the UI 150 is a suitable component that generates and serves web pages that can be rendered in a web browser of a suitable client device. However, it will be understood that the UI 150 may take other forms. For example, the UI 150 may be an application that runs natively on an operating system rather than in a browser.

Various modifications and alterations may be made to the examples disclosed above. In the discussion herein, the activities of the graph summariser 130 is applied to a graph data store 142 generated by the graph builder 120. However, these may be two separate processes. The graph builder 120 may generate a graph 142 that is not further processed to include summaries. Similarly, the graph summariser 130 may insert summary nodes into a graph data store 142 generated by techniques other than the those described above in relation to the graph builder 120.

Herein, the terms "entity" and "node" are effectively synonymous unless the particular context makes clear there is a distinction between the terms. Similarly, "relationship", "predicate" and "edge" are effectively synonymous unless the particular context makes clear there is a distinction between the terms. Furthermore, the term "graph" is synonymous with the data stored in the graph data store.

The examples discussed above pertain to text input to a machine learning model, but the concepts equally apply to other modalities of input. For example, the input may comprise audio, images, video, documents, or any other suitable input processable by the model. For example, this may allow the extraction of triplets and the generation of summaries based on audio, videos, images and so on.

In the examples discussed above, one model 300 is described, but it will be appreciated that different models may be employed for different parts of the process. For example, different models may be used to extract the triplets, refine the triplets and generate the summaries. In addition, the models used need not be hosted remotely from the system 100, but could instead be stored locally. In one particular example, a local model may be used to generate the triplets and a remote model may be used to generate the summaries. In addition to LLMs, SLMs (or similar equivalent models for different modalities) may be applied. For example, a locally-stored SLM (e.g. Phi-3) or LLM may be used.

In some examples, the SLM or LLM may be specifically trained or fine-tuned for the purpose of generating triplets or generating summaries or any of the other tasks discussed herein. Equally, other machine learning models specifically trained to generate the relevant output may be employed.

The disclosure also extends to systems and methods that incorporate the model(s) 300.

In the examples above, the graph data store 142 is accessed by a user via a user interface, such that it can be browsed, searched or otherwise navigated in order to allow the user (e.g. a cybersecurity analyst) to identify and analyze threats and take suitable remedial or precautionary actions. However, it will be understood that the graph data store 142 may be put to other uses. For example, the graph data store 142 may form a suitable repository of knowledge for question answering. For example, the graph data store may form a basis of grounding data included in queries to generative models (e.g. a security copilot application or the like). In other words, the methods discussed herein may include retrieving a node or edge (e.g. a summary node) from the graph in an input for a generative model to answer a user query.

In some examples, an autonomous agent may access the graph data store 142. For example, the autonomous agent may retrieve nodes or edges from the graph data store (e.g. a summary node), and based thereon, implement a mitigation action in a security system. A mitigation action is a response to a security threat that neutralizes or counteracts the threat. For example, implementing a mitigation action may include any of blocking an IP address, isolating an affected system, terminating a process, applying a security patch, and updating firewall rules. It may include controlling a device, such as a firewall or other piece of networking hardware.

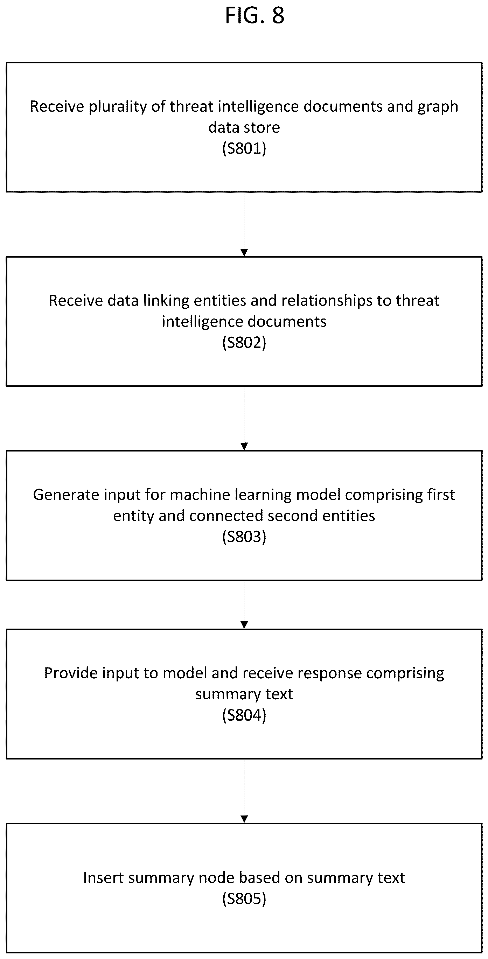

FIG. 8 is a flowchart of an example method.

In step S801, a plurality of threat intelligence documents and a graph data store are stored. The graph data store comprises a plurality of entity nodes corresponding to entities extracted from the plurality of threat intelligence documents; and a plurality of edges between the nodes representative of relationships between the nodes extracted from the plurality of threat intelligence documents.

In step S802, data is stored linking the plurality of entity nodes and plurality of edges to the threat intelligence documents from which the plurality of entity nodes and plurality of edges were extracted.

In step S803, an input is generated for a machine learning model. The input comprises a first entity node of the plurality of entity nodes; a plurality of second entity nodes of the plurality of entity nodes connected to first entity node by connecting edges of the plurality of edges; a subset of the threat intelligence documents from which the first entity nodes, second entity nodes and connecting edges were extracted; and instructions, which when processed by the generative machine learning model, cause the generative machine learning model to generate a summary text of threat intelligence for the first entity node, based on the first entity node, second entity nodes and the subset of the threat intelligence documents.

In step S804, the input is provided to the generative machine learning model, and in response the summary text is received.

In step S805, a summary node is inserted into the graph comprising the generated summary text; and edges are inserted into the graph connecting the summary node to the first entity node and plurality of second entity nodes.

The method may comprise further steps, as discussed herein.

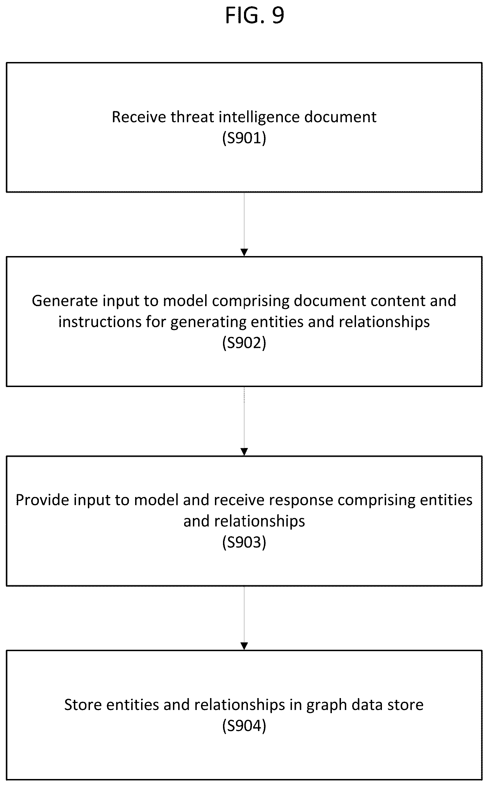

FIG. 9 is a flowchart of an example method.

In step S901, a threat intelligence document is received. In step S902, input is generated for a generative machine learning model comprising: content of the threat intelligence document; and instructions, which when processed by the generative machine learning model, cause the generative machine learning model to return a plurality of entities and a plurality of relationships defined between respective pairs of entities of the plurality of entities based on the content of the threat intelligent document. In step S903, the input is provided to the generative machine learning model and a response is received comprising the plurality of entities and plurality of relationships. In a step S904, the plurality of entities and plurality of relationships are stored in the graph data store.

The method may comprise further steps, as discussed herein.

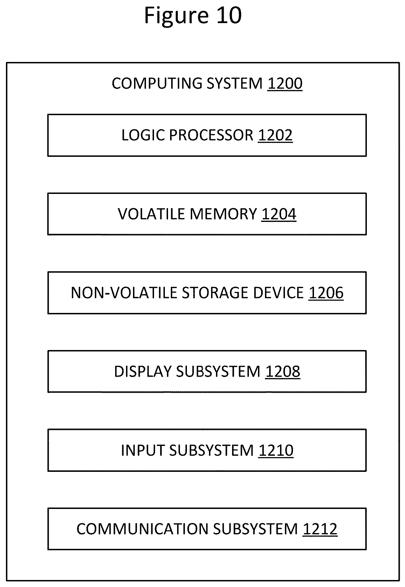

FIG. 10 schematically shows a non-limiting example of a computing system 1200 that can enact one or more of the methods and processes described above. Computing system 1200 is shown in simplified form. Computing system 1200 may embody any of the computer devices 100, 301, described above, or any other computer device discussed herein. Computing system 1200 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 1200 includes a logic processor 1202, volatile memory 1204, and a non-volatile storage device 1206. Computing system 1200 optionally includes a display subsystem 1208, input subsystem 1210, communication subsystem 1212, and/or other components not shown in FIG. 10.

Logic processor 1202 includes one or more physical devices configured to execute instructions. For example, the logic processor is configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor includes one or more physical processors (hardware) configured to execute software instructions. Additionally or alternatively, the logic processor includes one or more hardware logic circuits or firmware devices configured to execute hardware-implemented logic or firmware instructions. Processors of the logic processor 1202 may be single-core or multi-core, and the instructions executed thereon may be configured for sequential, parallel, and/or distributed processing. Individual components of the logic processor optionally are distributed among two or more separate devices, which may be remotely located and/or configured for coordinated processing. In examples, aspects of the logic processor are virtualized and executed by remotely accessible, networked computing devices configured in a cloud-computing configuration. In such a case, these virtualized aspects are run on different physical logic processors of various different machines, it will be understood.

Non-volatile storage device 1206 includes one or more physical devices configured to hold instructions executable by the logic processors to implement the methods and processes described herein. When such methods and processes are implemented, the state of non-volatile storage device 1206 may be transformed - e.g., to hold different data.

Non-volatile storage device 1206 may include physical devices that are removable and/or built-in. Non-volatile storage device 1206 includes any of optical memory (e g., CD, DVD, HD-DVD, Blu-Ray Disc, etc), semiconductor memory (e g., ROM, EPROM, EEPROM, FLASH memory, etc.), and/or magnetic memory (e.g., hard-disk drive), or other mass storage device technology. Non volatile storage device 1206 includes any of nonvolatile, dynamic, static, read/write, read-only, sequential-access, location-addressable, file-addressable, and/or content-addressable devices. It will be appreciated that non-volatile storage device 1206 is configured to hold instructions even when power is cut to the non-volatile storage device 1206.

Volatile memory 1204 may include physical devices that include random access memory. Volatile memory 1204 is typically utilized by logic processor 1202 to temporarily store information during processing of software instructions. It will be appreciated that volatile memory 1204 typically does not continue to store instructions when power is cut to the volatile memory 1204.

Aspects of logic processor 1202, volatile memory 1204, and non-volatile storage device 1206 may be integrated together into one or more hardware-logic components. Such hardware-logic components include, for example, field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1200 typically implemented in software by a processor to perform a particular function using portions of volatile memory, which function involves transformative processing that specially configures the processor to perform the function. Thus, a module, program, or engine can be instantiated via logic processor 1202 executing instructions held by non-volatile storage device 1206, using portions of volatile memory 1204. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 1208 can be used to present a visual representation of data held by non-volatile storage device 1406. The visual representation takes the form of a graphical user interface (GUI). Because the herein described methods and processes change the data held by the non-volatile storage device, and thus transform the state of the non-volatile storage device, the state of display subsystem 1208 may likewise be transformed to visually represent changes in the underlying data. In examples, display subsystem 1208 includes one or more display devices utilizing virtually any type of technology. Such display devices can be combined with logic processor 1202, volatile memory 1204, and/or non-volatile storage device 1206 in a shared enclosure, or such display devices are peripheral display devices.

When included, input subsystem 1210 comprises or interfaces with one or more user-input devices such as a keyboard, mouse, touch screen, or game controller. In some examples, the input subsystem comprises or interfaces with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 1212 is configured to communicatively couple various computing devices described herein with each other, and with other devices. Communication subsystem 1212 may include wired and/or wireless communication devices compatible with one or more different communication protocols. As non-limiting examples, the communication subsystem is configured for communication via a wireless telephone network, or a wired or wireless local- or wide-area network. In some examples, the communication subsystem allows computing system 1200 to send and/or receive messages to and/or from other devices via a network such as the internet.

Additional example features of the disclosure are set out below.

According to a first aspect of the disclosure there is provided a computer-implemented method comprising: storing threat intelligence documents; storing, in a graph data store, a graph comprising: entity nodes corresponding to entities extracted from the threat intelligence documents; and a plurality of edges between the entity nodes representative of relationships between the entity nodes extracted from the threat intelligence documents; storing data linking the entity nodes and plurality of edges to the threat intelligence documents from which the entity nodes and plurality of edges were extracted; generating an input for a generative machine learning model comprising: a first entity node of the entity nodes; a plurality of second entity nodes of the entity nodes connected to first entity node by connecting edges of the plurality of edges; a subset of the threat intelligence documents from which the first entity nodes, the plurality of second entity nodes and the connecting edges were extracted; instructions, which when processed by the generative machine learning model, cause the generative machine learning model to generate a summary text of threat intelligence for the first entity node, based on the first entity node, the plurality of second entity nodes and the subset of the threat intelligence documents; providing the input to the generative machine learning model, and in response receiving the summary text; inserting a summary node into the graph comprising the generated summary text; and inserting edges into the graph connecting the summary node to the first entity node and plurality of second entity nodes.

The method may comprise selecting as the plurality of second entity nodes, entity nodes within n hops of the first entity node. N may be 1, 2, 3, 4 or 5.

The method may comprise applying a community detection algorithm to the graph to generate a plurality of communities. The method may comprise selecting a community of the plurality of communities comprising the first entity node. The method may comprise selecting entity nodes in the selected community other than the first entity node as the plurality of second entity nodes. The plurality of communities may represent clusters of entity nodes in the graph. The plurality of communities may be clusters of entity nodes that are relatively densely connected. Comparatively few edges may join the entity nodes of different ones of the plurality of communities. The community detection algorithm may be the Louvain method.

The method may comprise inserting a plurality of summary nodes into the graph, the summary nodes summarizing different ones of the entity nodes. The summary nodes may be generated by repeating the process outlined in the definition of the first aspect, with different selected first entity nodes. The method may comprise applying a community detection algorithm to the graph to generate a plurality of communities. The method may comprise selecting a community of the plurality of communities and extracting summary nodes comprised in the selected community. The method may comprise generating an input for a generative machine learning model comprising: the summary text of the extracted summary nodes, and instructions, which when processed by the generative machine learning model, cause the generative machine learning model to generate a community summary, based on the summary text of the extracted summary nodes. The method may comprise providing the input to the generative machine learning model and receiving a response comprising the community summary. The method may comprise inserting a community summary node into the graph comprising the generated community summary. The community summary node may be connected by an edge to one or more of the nodes in the selected community.

The method may comprise: receiving a threat intelligence document of the threat intelligence documents; generating an input for a generative machine learning model comprising: content of the threat intelligence document; and instructions, which when processed by the generative machine learning model, cause the generative machine learning model to return a plurality of entity nodes and a plurality of edges defined between respective pairs of entity nodes of the plurality of entity nodes based on the content of the threat intelligent document. The method may comprise providing the input to the generative machine learning model and receiving a response comprising the plurality of entities and plurality of relationships. The method may comprise storing the plurality of entities and plurality of relationships in the graph data store. The content of the threat intelligence document may be text of the threat intelligence document.

The method may comprise generating an input for a generative machine learning model comprising: the plurality of entity nodes and the plurality of edges generated by the generative machine learning model; and instructions, which when processed by the generative machine learning model, cause the generative machine learning model to identify redundant edges or entity nodes amongst the plurality of edges and entity nodes. The method may comprise providing the input to the generative machine learning model and receiving a response identifying the redundant entity nodes or edges; and storing the plurality of entity nodes and plurality of edges other than the identified redundant entity nodes or edges in the graph data store.

The method may comprise retrieving the threat intelligence document from the internet. The threat intelligence document may be retrieved from a publicly-available database, such as those provided by the Information Sharing and Analysis Organizations (ISAOs), Information Sharing and Analysis Centers (ISACs), the National Vulnerability Database, the MITRE corporation, the Joint Regional Intelligence Centers, among others. The threat intelligence document may be a social media post retrieved from a social media platform. The threat intelligence document may be a webpage. The threat intelligence document may be retrieved from an RSS (Really Simple Syndication) feed. The method may comprise crawling the internet using a web crawler to retrieve the threat intelligence document.

The method may include retrieving an entity node or an edge or a summary node from the graph, and generating an input for a generative model comprising a query, the retrieved entity node, edge or summary node, and instructions that cause the generative model to generate a response to the query based on the retrieved entity node, edge or summary node.

The method may include retrieving an entity node or an edge or a summary node from the graph, and based on the retrieved entity node or edge, implementing a mitigation action in a security system. Implementing a mitigation action may include controlling a device, such as a firewall or other piece of networking hardware based on the response. Implementing a mitigation action may include blocking an IP address, removing or altering access rights of a user, generating a notification or log entry and the like. The method may include an autonomous agent, which retrieves the node or edge and implements the mitigation action.

The method may comprise causing rendering of a user interface comprising a visual representation of at least part of the graph. The method may comprise receiving user input selecting the summary node; and causing rendering of the summary text. The method may comprise causing rendering of navigation controls for navigating the graph; and in response to receiving user input at the navigation controls, altering the visual representation of the at least part of the graph rendered on the user interface. The navigation controls may include zoom and/or pan controls. Causing rendering may comprise generating and serving webpages to be rendered in a browser of a client device.

An entity node may represent a semantically meaningful element comprised in a threat intelligence document. An entity node may correspond to a person, organization or place. An entity node may represent one or more of: a threat actor, an organization that has been attacked, an IP address, a file hash, a threat vector, an operating system, a domain, and a common vulnerability and exploit.

The optional features defined above in relation to the first aspect may be combined in any combination. Accordingly, each sentence in the optional features defined above can be read as if it is a dependent claim referring to the features of any preceding sentence.

According to a second aspect of the disclosure, there is provided a computer system comprising a processor and a memory, the memory storing instructions, the instructions when executed by the processor causing the system to: retrieve threat intelligence documents; generate a plurality of first inputs for a generative machine learning model, the first inputs comprising: contents of a threat intelligence document of the threat intelligence documents; and instructions, which when processed by the generative machine learning model, cause the generative machine learning model to return a plurality of entity nodes and a plurality of edges defined between respective pairs of entities of the plurality of entities based on the contents of the threat intelligent document; provide the plurality of first inputs to the generative machine learning model and receive responses comprising the plurality of entity nodes and the plurality of edges; store, in a graph data store, the plurality of entity nodes and the plurality of edges; store data linking the plurality of entity nodes and the plurality of edges to the threat intelligence document from which the plurality of entity nodes and the plurality of edges were extracted; generate a second input for the generative machine learning model comprising instructions that cause the generative machine learning model to generate a summary text of threat intelligence for a first entity node of the plurality of entity nodes, based on the threat intelligence document from which the first entity node was extracted; provide the second input to the generative machine learning model, and in response receive the summary text; and insert a summary node into the graph data store comprising the generated summary text

The second input may comprise: the first entity node of the plurality of entity nodes; a plurality of second entity nodes of the plurality of entity nodes connected to the first entity node by connecting edges of the plurality of edges; a subset of the threat intelligence documents from which the first entity nodes, the second entity nodes, and the connecting relationships were extracted; instructions, which when processed by the generative machine learning model, cause the generative machine learning model to generate the summary text, based on the first entity node, second entity nodes and the subset of the threat intelligence documents.

The second entity nodes may be entity nodes within 1 hop of the first entity node.

The computer system may store further instructions, which when executed, cause the system to: insert a plurality of summary nodes into the graph, the summary nodes summarizing different ones of the entity nodes; apply a community detection algorithm to the graph to generate a plurality of communities; select a community of the plurality of communities; extract summary nodes comprised in the selected community; generate a third input for a generative machine learning model comprising: the summary text of the extracted summary nodes, and instructions, which when processed by the generative machine learning model, cause the generative machine learning model to generate a community summary, based on the summary text of the extracted summary nodes; provide the third input to the generative machine learning model and receive a response comprising the community summary; and insert a community summary node into the graph comprising the generated community summary.

The computer system may store further instructions, which when executed, cause the system to: generating a fourth input for a generative machine learning model comprising: the plurality of entity nodes and the plurality of edges generated by the generative machine learning model in response to the first inputs; instructions, which when processed by the generative machine learning model, cause the generative machine learning model to identify redundant entity nodes or edges amongst the plurality of entity nodes and the plurality of edges; providing the fourth input to the generative machine learning model and receiving a response identifying the redundant entity nodes or edges; and storing the plurality of entity nodes and plurality of edges other than the identified redundant entity nodes or edges in the graph data store.

The plurality of entity nodes may represent one or more of: a threat actor, an organization that has been attacked, an IP address, a file hash, a threat vector, an operating system, and a common vulnerability and exploit.

The computer system may store further instructions, which when executed, cause the system to: cause rendering of a user interface comprising a visual representation of at least part of the graph; receive user input selecting the summary node; and cause rendering of the summary text.

The optional features defined above in relation to the second aspect may be combined in any combination. Accordingly, each sentence in the optional features defined above can be read as if it is a dependent claim referring to the features of any preceding sentence.

According to a third aspect of the disclosure, there is provided a non-transitory computer-readable medium comprising instructions, which when executed by a processor, cause the processor to: generate an input for a generative machine learning model comprising: a first entity node of a plurality of entity nodes extracted from threat intelligence documents; a plurality of second entity nodes of the plurality of entity nodes connected to the first entity node by connecting edges extracted from the threat intelligence documents; the threat intelligence documents from which the first entity nodes, second entity nodes, and the connecting edges were extracted; instructions, which when processed by the generative machine learning model, cause the generative machine learning model to generate a summary text of threat intelligence for the first entity node, based on the first entity node, the second entity nodes and the threat intelligence documents; provide the input to the generative machine learning model, and in response receive the summary text.

The non-transitory computer-readable medium may further comprise instructions, which when executed by the processor, cause the processor to; store the plurality of entity nodes and the connecting edges in a graph of a graph data store; insert a summary node into the graph comprising the generated summary text; and insert edges into the graph data store connecting the summary node to the first entity node and plurality of second entity nodes.

The non-transitory computer-readable medium may further comprise instructions, which when executed by the processor, cause the processor to: insert a plurality of summary nodes into the graph, the summary nodes summarizing different ones of the entity nodes; apply a community detection algorithm to the graph to generate a plurality of communities; select a community of the plurality of communities; extract summary nodes comprised in the selected community; generate an input for a generative machine learning model comprising: the summary text of the extracted summary nodes, and instructions, which when processed by the generative machine learning model, cause the generative machine learning model to generate a community summary, based on the summary text of the extracted summary nodes; provide the input to the generative machine learning model and receiving a response comprising the community summary; and inserting a community summary node into the graph comprising the generated community summary.

The non-transitory computer-readable medium may further comprise instructions, which when executed by the processor, cause the processor to: receive a threat intelligence document; generate an input for a generative machine learning model comprising: content of the threat intelligence document; and instructions, which when processed by the generative machine learning model, cause the generative machine learning model to return a plurality of entities and a plurality of relationships defined between respective pairs of entities of the plurality of entities based on the content of the threat intelligent document; provide the input to the generative machine learning model and receive a response comprising the plurality of entities and plurality of relationships; store the plurality of entities and plurality of relationships in the graph data store.

The optional features defined above in relation to the third aspect may be combined in any combination. Accordingly, each sentence in the optional features defined above can be read as if it is a dependent claim referring to the features of any preceding sentence.

Furthermore, the optional features of the first, second and third aspect may be combined in any combination.

According to another aspect of the disclosure, there is provided a computer-implemented method comprising: receiving a threat intelligence document; generating an input for a generative machine learning model comprising: content of the threat intelligence document; and instructions, which when processed by the generative machine learning model, cause the generative machine learning model to return a plurality of entities and a plurality of relationships defined between respective pairs of entities of the plurality of entities based on the content of the threat intelligent document; providing the input to the generative machine learning model and receiving a response comprising the plurality of entities and plurality of relationships; storing the plurality of entities and plurality of relationships in a graph data store.

The disclosure further extends to computer systems, methods and computer readable-media having scope corresponding to the above-defined aspects.

According to another aspect of the disclosure, there is provided a computer program product comprising instructions which when executed by a processor cause the processor to carry out any of the methods disclosed herein.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method comprising:
storing threat intelligence documents;
storing, in a graph data store (142), a graph (510) comprising:
entity nodes (512-514) corresponding to entities extracted from the threat intelligence documents; and
a plurality of edges (512a-514a) between the entity nodes (512-514) representative of relationships between the entity nodes (512-514) extracted from the threat intelligence documents;
storing data linking the entity nodes (512-514) and plurality of edges (512a-514a) to the threat intelligence documents from which the entity nodes (512-514) and plurality of edges (512a-514a) were extracted;
generating (S803) an input for a generative machine learning model (300) comprising:
a first entity node of the entity nodes (512-514);
a plurality of second entity nodes of the entity nodes (512-514), the plurality of second entity nodes connected to the first entity node by connecting edges of the plurality of edges (512a-514a);
a subset of the threat intelligence documents from which the first entity node, the plurality of second entity nodes, and the connecting edges were extracted;
instructions, which when processed by the generative machine learning model (300), cause the generative machine learning model (300) to generate a summary text (530) of threat intelligence for the first entity node, based on the first entity node, the plurality of second entity nodes, and the subset of the threat intelligence documents;
providing (S804)the input to the generative machine learning model (300), and in response, receiving the summary text (530);
inserting (S805) a summary node (515) into the graph comprising the summary text (530); and
inserting edges into the graph (510) connecting the summary node (515) to the first entity node and the plurality of second entity nodes.

2. The method of claim 1, comprising:
selecting, as the plurality of second entity nodes, entity nodes within n hops of the first entity node.

3. The method of claims 1 or 2, comprising:
applying a community detection algorithm to the graph to generate a plurality of communities (601-603);
selecting a community (601) of the plurality of communities (601-603) comprising the first entity node;
selecting entity nodes in the selected community (601) other than the first entity node as the plurality of second entity nodes.

4. The method of any of claims 1, 2 or 3, comprising:
inserting a plurality of summary nodes into the graph, the summary nodes summarizing different ones of the entity nodes;
applying a community detection algorithm to the graph to generate a plurality of communities;
selecting a community (601) of the plurality of communities (601-603);
extracting summary nodes comprised in the selected community (601)
generating an input (620) for a generative machine learning model (300) comprising:
the summary text of the extracted summary nodes, and
instructions, which when processed by the generative machine learning model (300), cause the generative machine learning model (300) to generate a community summary (630), based on the summary text of the extracted summary nodes;
providing the input to the generative machine learning model (300) and receiving a response comprising the community summary (630); and
inserting a community summary node (615) into the graph (601) comprising the generated community summary (630).

5. The method of any preceding claim, comprising:
receiving (S901) a threat intelligence document of the threat intelligence documents;
generating (S902) an input for a generative machine learning model (300) comprising:
content of the threat intelligence document; and
instructions, which when processed by the generative machine learning model (300), cause the generative machine learning model (300) to return a plurality of entity nodes and a plurality of edges defined between respective pairs of entity nodes of the plurality of entity nodes based on the content of the threat intelligent document;
providing (S903) the input to the generative machine learning model (300) and receiving a response comprising the plurality of entities and plurality of relationships;
storing (S904) the plurality of entities and plurality of relationships in the graph data store (142).

6. The method of any preceding claim, comprising:
generating an input for a generative machine learning model (300) comprising:
the plurality of entity nodes and the plurality of edges;
instructions, which when processed by the generative machine learning model (300), cause the generative machine learning model (300) to identify redundant edges or entity nodes amongst the plurality of edges and entity nodes;
providing the input to the generative machine learning model (300) and receiving a response identifying the redundant edges or entity nodes; and
storing the plurality of entity nodes and plurality of edges other than the redundant entity nodes or edges in the graph data store (142).

7. The method of any preceding claim, comprising retrieving the summary node from the graph data store (142), and based on the summary node, implementing a mitigation action in a security system.

8. The method of any preceding claim, comprising:
causing rendering of a user interface (150) comprising a visual representation of at least part of the graph (151);
receiving user input selecting the summary node (154); and
causing rendering of the summary text (155).

9. The method of claim 8, comprising:
causing rendering of navigation controls (152) for navigating the graph; and
in response to receiving user input at the navigation controls (152), altering the visual representation of the at least part of the graph rendered on the user interface (150).

10. The method of any preceding claim, wherein the plurality of entity nodes represents one or more of: a threat actor, an organization that has been attacked, an IP address, a file hash, a threat vector, an operating system, and a common vulnerability and exploit.

11. A computer system (1200) comprising a processor (1202) and a memory (1206), the memory (1206) storing instructions, the instructions when executed by the processor (1202) causing the system (1200) to:
retrieve threat intelligence documents;
generate a plurality of first inputs for a generative machine learning model (300), the first inputs comprising:
contents of a threat intelligence document of the threat intelligence documents; and
instructions, which when processed by the generative machine learning model (300), cause the generative machine learning model (300) to return a plurality of entity nodes (512-514) and a plurality of edges (512a-514a) defined between respective pairs of entities of the plurality of entities (512-514) based on the contents of the threat intelligent document;
provide the plurality of first inputs to the generative machine learning model (300) and receive responses comprising the plurality of entity nodes (512-514) and the plurality of edges (512a-514a);
store, in a graph data store (142), the plurality of entity nodes (512-514_ and the plurality of edges (512a-514a);
store data linking the plurality of entity nodes (512-514) and the plurality of edges (512a-514a) to the threat intelligence document from which the plurality of entity nodes (512-514) and the plurality of edges (512a-514a) were extracted;
generate a second input for the generative machine learning model (300) comprising instructions that cause the generative machine learning model (300) to generate a summary text (530) of threat intelligence for a first entity node of the plurality of entity nodes, based on the threat intelligence document from which the first entity node was extracted;
provide the second input to the generative machine learning model (300), and in response receive the summary text (530); and
insert a summary node (515) into the graph data store (142) comprising the generated summary text (530).

12. The computer system of claim 11, wherein the second input comprises:
the first entity node of the plurality of entities (512-514);
a plurality of second entity nodes of the plurality of entity nodes (512-514) connected to the first entity by connecting edges of the plurality of edges (512a-514a);
a subset of the threat intelligence documents from which the first entity nodes, second entity nodes, and connecting relationships were extracted;
instructions, which when processed by the generative machine learning model (300), cause the generative machine learning model (300) to generate the summary text (530), based on the first entity node, second entity nodes, and the subset of the threat intelligence documents.

13. The computer system of claim 12, wherein the second entity nodes are entity nodes within 1 hop of the first entity node.

14. The computer system of any of claims 11 to 13, storing further instructions, which when executed, cause the system to:
insert a plurality of summary nodes into the graph, the summary nodes summarizing different ones of the entity nodes;
apply a community detection algorithm to the graph to generate a plurality of communities (601-603);
select a community (601) of the plurality of communities (601-603);
extract summary nodes comprised in the selected community (601)
generate a third input (620) for a generative machine learning model (300) comprising:
the summary text of the extracted summary nodes, and
instructions, which when processed by the generative machine learning model (300), cause the generative machine learning model (300) to generate a community summary (630), based on the summary text of the extracted summary nodes;
provide the third input (620) to the generative machine learning model (300) and receive a response comprising the community summary (630); and
insert a community summary node (615) into the graph (601) comprising the generated community summary (630).

15. A non-transitory computer-readable medium comprising instructions, which when executed by a processor (1202), cause the processor (1202) to:
generate (S803) an input for a generative machine learning model (300) comprising:
a first entity node of a plurality of entity nodes (512-514) extracted from threat intelligence documents;
a plurality of second entity nodes of the plurality of entity nodes (512-514) connected to the first entity node by connecting edges extracted from the threat intelligence documents;
the threat intelligence documents from which the first entity nodes, second entity nodes, and the connecting edges were extracted;
instructions, which when processed by the generative machine learning model (300), cause the generative machine learning model (300) to generate a summary text (530) of threat intelligence for the first entity node, based on the first entity node, the second entity nodes and the threat intelligence documents;
provide the input to the generative machine learning model (300), and in response receive the summary text (530) .
